Europäisches Patentamt

European Patent Office

Office européen des brevets

(19)

(11) Publication number: **0 040 973**
**B1**

(12) **EUROPEAN PATENT SPECIFICATION**

(45) Date of publication of patent specification: **15.08.84**

(51) Int. Cl.³: **G 02 B 27/17, H 04 N 1/04**

(21) Application number: **81302291.0**

(22) Date of filing: **22.05.81**

(54) **An image reading out and recording apparatus.**

(30) Priority: **22.05.80 JP 67098/80**

(43) Date of publication of application:
**02.12.81 Bulletin 81/48**

(45) Publication of the grant of the patent:
**15.08.84 Bulletin 84/33**

(84) Designated Contracting States:
**DE FR GB**

(56) References cited:
**AU - B - 18 426**
**DE - B - 2 447 464**
**US - A - 3 626 091**
**US - A - 4 015 081**

(73) Proprietor: **KONISHIROKU PHOTO INDUSTRY CO. LTD.**
**No. 26-2, Nishishinjuku 1-chome Shinjuku-ku Tokyo 160 (JP)**

(72) Inventor: **Akanabe, Yuichi**
**17-5 Higasi 1-chome**
**Kunitachi-shi Tokyo (JP)**
Inventor: **Maeda, Masatoshi**
**9-5 1-chome Teraodai Tama-ku**
**Kawasaki-shi Kanagawa-ken (JP)**
Inventor: **Ikeda, Hiroaki**
**3-1-12 Takamatsu-cho**
**Tachikawa-shi Tokyo (JP)**
Inventor: **Funaki, Shinesuke**
**108-21-406 Yokokawa-cho**
**Hachioji-shi Tokyo (JP)**

(74) Representative: **Ellis-Jones, Patrick George Armine et al,**
**J.A. KEMP & CO. 14 South Square Gray's Inn London WC1R 5EU (GB)**

Courier Press, Leamington Spa, England.

## Description

The present invention relates to equipment for reading out and writing in by light beam scanning using a photodeflector functioning as a switching device.

Recently in facsimiles, large sized displays, copying machines, etc, equipment has been used which can both read out and record (display) originals, by scanning with light beams such as laser beams.

In such equipment, it is usual that the beams for reading out and the beams for recording or for displaying, modulated by image forming signals obtained from reading out, are scanned by the same photodeflector (see, for example, US—A—3626091 and US—A—4015081).

For scanning two beams using the same photodeflector, it has been proposed that the respective light beams are used for reading out and writing in and each beam is reflected off the same rotatable mirror at different angles, and each beam is reflected off different surfaces of said rotatable mirror. However, these methods require separate optical systems for the respective beams, and this makes the device complicated and also makes the adjustment of said optical systems troublesome.

To cope with this, a variety of methods have been proposed so as to make the incident beams follow the same path in the two directions, and to separate the resulting single beam into separate beams after passing through the photodeflector. However, these systems have many defects. Thus in a method utilizing unmodulated zero-phase-sequence-light and primary-phase-sequence diffraction light modulated using an accoustic optical modulator, considerable precision in the optical system adjustments is required because of the fact that the deflection angles of said two beams are, in general, small, usually only some tens of m rad. In a method using reflection mirrors behind a photodeflector and switching the light paths by moving said mirrors mechanically, it is difficult to speed up the switching of the light paths and also to relocate said mirrors in a fixed position with a high degree of accuracy. In a method where the direction of the deflected light beam is switched using electro-optical effects and where the light beams are either reflected or transmitted through a polarizing prism (eg Glan-Thompson prism) utilizing multiple refraction, the necessary electro-optic effect elements and multiple refraction prisms are expensive and, in addition, it is necessary to turn on and off a high tension voltage that produces the electro-optic effect. In a method where the beams are mixed with rays of light each having a different wavelength from each other and mixture and separation of the rays of light are performed using dichroic mirrors, there is the fundamental defect that light beam separation cannot be performed perfectly using dichroic mirrors, and besides, it is expensive to use a plurality of light sources such as lasers. There is also the method where the rays of light are separated using a single light source and half-mirrors only; it is however impossible to separate the beams for reading out and those for writing in. Also this method necessitates the use of an exceedingly wide angle modulator, because the optical modulator for writing in has to be arranged behind the portion where the beams are scanned by a photodeflector and are then reflected on the half-mirrors.

The present invention makes use of a photodeflector, comprising rotatable multiple mirrors whose reflection surfaces are divided into a plurality of groups, and the angle of each group to the axis of rotation of the rotatable multiple mirrors is changed respectively to the other, such that the light beam scanning and light path separation can be carried out simultaneously. According to the present invention there is provided an image reading out and recording apparatus which comprises a photodeflector which comprises a plurality of groups of mirrors rotatable around an axis, each of said mirrors being arranged successively around the said axis, each of said groups consisting of the same number of mirrors and each of said mirrors of a group being disposed so that their surfaces are inclined at the same angle in relation to said rotation axis and so that the surfaces of mirrors of a given group are at a different angle in relation to said rotation axis to the surfaces of mirrors of the other grup or groups, means for projecting a light beam at said photodeflector so as to cause said photodeflector to reflect the beam and a photodetector for recording light reflected from an original by said photodeflector, characterised in that a single light beam source supplies the light beam which is projected at the photodeflector such that, upon rotation of the latter about said axis, the beam is reflected from one group of mirrors onto a photosensitive element and from another group of mirrors onto the original, a memory for the signals received by the photodetector and a photomodulator for modulating said light beam in response to signals from said memory.

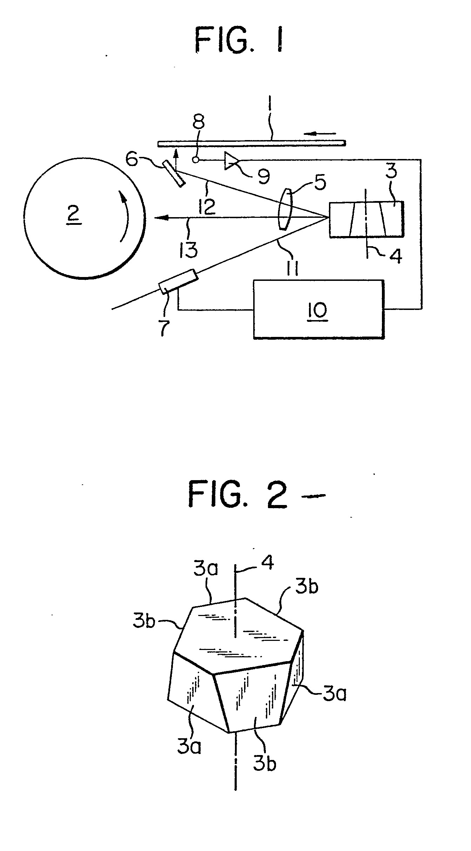

The present invention will now be described merely by way of example, with reference to the accompanying drawing, in which: Figure 1 is a diagram of one exemplary construction of an image reading out and recording equipment using a photodeflector of the present invention, and

Figure 2 is a perspective view of an embodiment of a photodeflector of the invention.

Referring to Figure 1, the numeral 1 designates an original for reading out which is scanned by multiple mirrors 3 rotatable about an axis, perpendicular to the paper sheet and which at the same time is transported in the direction of the arrow which serves as a subscan. Numeral 2 is a photosensitive substance such as an electrostatic recording substance, which is scanned by light beams in the direction of the generating line of the cylinder of said photosensitive substance in synchronization with the transportation of original 1 in the direction of the arrow.

Numeral 3 represents rotatable multiple mirrors, an example of which is shown in Figure 2; two pairs of reflection surfaces, 3a and 3b, arranged alternately, are inclined by the same angle to the axis of rotation 4 in an opposite sense.

Numeral 5 is a condenser lens comprising one or a plurality of lenses. 6 is a reflecting mirror. 7 is a photomodulator, 8 is a photodetector, 9 is an amplifier, 10 is a buffer-memory which retains once an image signal has been read out by photodetector 8. Further, 11 is an incident beam, 12 is a beam for reading out and 13 is a beam for writing in.

When this equipment is used as a copying machine, light beam 11 from a light source (not shown in the drawing) is reflected on rotatable multiple mirrors 3b without being modulated by photomodulator 7, and the reflected light 12 is focused to a spot on original 1 through condenser lens 5 and reflection mirror 6. The said spot is scanned in a vertical direction in relation to the paper sheet by the rotation of rotatable multiple mirrors 3. The reflected light from original 1 is detected as image information by photodetector 8, and then retained in buffer memory 10 through amplifier 9. When rotatable multiple mirrors 3 rotate and light beam 11 hits reflection surfaces 3a, the light is switched (reflected) along light path 13 and scans photosensitive substance 2. Photomodulator 7 is started by information memorized in buffer memory 10 synchronously with the light path switching, with the result that the same image is formed on photosensitive substance 2 as the detected on photosensitive substance 2 by photodetector 8.

In the embodiment shown in Figure 2, two pairs of reflective surfaces, 3a and 3b, are inclined opposedly to rotation axle 4 at the same angle; however it is to be appreciated that the invention is not limited to this particular embodiment provided that the angle of inclination of each surface of each group is the same. Preferably the mirrors of the first group are at the same angle in relation to the rotation axis as the mirrors of the second group but in the opposite direction. Also it is preferred that the mirrors of a group are at regularly spaced intervals around the rotation axis.

In the embodiment shown in Figure 1, the angle between light paths 12 and 13 is determined by the axial angle between the reflection surfaces 3a and 3b; therefore it is better to separate the two light paths from each other to a degree such that the arrangements and adjustments of optical systems 5, 6 and 7 etc can easily be made, and in case of the two light paths in this embodiment, it is desirable to reduce the angle to one that condenser lens 5 can be commonly used for.

In addition to the above, when the memory capacity of buffer memory 10 is increased, a variety of design changes within the scope of the invention are feasible; for example, reflection surfaces, 3a and 3b, need not be arranged alternately but successively with, say, three of each type of surfaces and, memory and recording are made on every three scanning lines; again the reflection surfaces can be divided into three groups, 3a, 3b and 3c, one group out of which is used for reading out an image, one group for recording and the remaining group for displaying. Also, it will, of course, be appreciated that not only rotatable reflection mirrors having six mirrors, but also those having eight mirrors, or nine mirrors as the case may be, can be used.

## Claims

1. An image reading out and recording apparatus which comprises a photo-deflector which comprises a plurality of groups of mirrors rotatable around an axis, each of said mirrors being arranged successively around the said axis, each of said groups consisting of the same number of mirrors and each of said mirrors of a group being disposed so that their surfaces are inclined at the same angle in relation to said rotation axis and so that the surfaces of mirrors of a given group are at a different angle in relation to said rotation axis to the surfaces of mirrors of the other group or groups, means for projecting a light beam at said photodeflector so as to cause said photo-deflector to reflect the beam and a photodetector for recording light reflected from an original by said photodeflector, characterised in that a single light beam source supplies the light beam which is projected at the photodeflector such that, upon rotation of the latter about said axis, the beam is reflected from one group of mirrors onto a photosensitive element and from another group of mirrors onto the original, a memory for the signals received by the photodetector and a photomodulator for modulating said light beam in response to signals from said memory.

2. An apparatus according to claim 1 which comprises 2 groups of mirrors.

3. An apparatus according to claim 2 in which the mirrors of the first group are at the same angle in relation to said rotation axis but in the opposite direction as the mirrors of the second group.

4. An apparatus according to any one of claims 1 to 3 in which each group of mirrors comprises 3 mirrors.

5. An apparatus according to any one of claims 1 to 4 in which the mirrors of a group are at regularly spaced intervals around the rotation axis.

## Patentansprüche

1. Gerät zum Lesen und Wiedergeben eines Bildes, mit einem Lichtdeflektor bestehend aus einer Mehrzahl von um eine Achse drehbaren Spiegelgruppen, von denen jeder Spiegel nacheinander um diese Achse herum angeordnet ist und wobei jede der Gruppen aus derselben Anzahl von Spiegeln besteht un jeder Spiegel einer Gruppe so eingestellt ist, daß die Spiegelflächen, bezogen auf die Drehachse, um denselben Winkel geneigt sind und daß die Spiegelflächen einer gegebenen Gruppe, bezogen auf die Drehachse, gegenüber den Spiegelflächen der anderen Gruppe oder Gruppen um einen unterschiedlichen Winkel Geneigt sind, mit einer Einrichtung zum Aussenden eines Lichtstrahles auf den Lichtdeflektor, so daß dieser den Lichtstrahl reflektiert, und mit einem Lichtdetektor zur Aufnahme von Licht, das von einer Vorlage durch den Lichtdeflektor refektiert wird, dadurch gekennzeichnet, daß eine einzige Lichtquelle den Lichtstrahl liefert, der so auf den Lichtdeflektor projiziert wird, daß bei dessen Drehung um die genannte Achse der Lichtstrahl von einer Speigelgruppe auf ein lichtempfindliches Element und von einer anderen Spiegelgruppe auf die Vorlage reflektiert wird, un gekennzeichnet durch einen Speicher für die von dem Lichtdetektor aufgenommenen Signale un einen Lichtmodulator zur Modulation des genannten Lichtstrahles in Abhängigkeit von Signalen des genannten Speichers.

2. Gerät nach Anspruch 1, das zwei Spiegelgruppen umfasst.

3. Gerät nach Anspruch 2, bei dem die Spiegel der ersten Gruppe, bezogen auf die genannte Drehachse, um denselben Winkel, jedoch in entgegengesetzter Richtung wei die Spiegel der zweiten Gruppe geneigt sind.

4. Gerät nach einem der Ansprüche 1 bis 3, bei dem jede Spiegelgruppe drei Spiegel unfasst.

5. Gerät nach einem der Ansprüche 1 bis 4, bei dem die Spiegel einer Gruppe in Intervallen von regelmässigem Abstand um die Drehachse angeordnet sind.

**Revendications**

1. Appareil de lecture et d'enregistrement d'une image comprenant un photodéflecteur qui comprend une pluralité de groupes de miroirs pouvant tourner autour d'un axe, chacun des miroirs étant agencé successivement autour dudit axe, chacun desdits groupes consistant dans le même nombre de miroirs et chacun desdits miroirs d'un groupe étant disposé de telle sorte que leurs surfaces sont inclinées du même angle relativement audit axe de rotation et que les surfaces des miroirs d'un groupe donné sont à un angle différent relativement audit axe de rotation par rapport aux surfaces de miroirs du ou des autres groupes, des moyens pour projeter un faisceau de lumière sur ledit photodéflecteur de façon à amener ledit photodéflecteur à réfléchir le faisceau et un photodétecteur pour enregistrer la lumière réfléchie à partir d'un original par ledit photodéflecteur, caractérisé par le fait qu'il comprend une seule source de faisceau de lumière pour fournir le faisceau de lumière qui est projeté sur le photodéflecteur de telle sorte que, lors de la rotation de ce dernier autour dudit axe, le faisceau est réfléchi dupuis un groupe de miroirs sur un élément photosensible et depuis un autre groupe de miroirs sur l'original, une mémoire pour les signaux reçus par le photodètecteur et un photomodulateur pour moduler ledit faisceau de lumiére en réponse aux signaux provenant de ladite mémoire.

2. Appareil selon la revendication 1, caractérisé par le fait qu'il comprend deux groupes de miroirs.

3. Appareil selon la revendication 2, caractérisé par le fait que les miroirs du premier groupe forment un même angle relativement audit axe de rotation mais dans la direction opposée que les miroirs du second groupe.

4. Appareil selon l'une quelconque de revendications 1 à 3, caractérisé par le fait que chaque groupe de miroirs comprend trois miroirs.

5. Appareil selon l'une quelconque de revenications 1 à 4, caractérisé par le fait que les miroirs d'un groupe se trouvent à des intervalles régulièrement espacés autour de l'axe de rotation.

# FIG. I

# FIG. 2 —